# EUROPÄISCHE PATENTSCHRIFT

(11) **EP 1 048 857 B1**
(45) Veröffentlichungstag und Bekanntmachung des Hinweises auf die Patenterteilung: **22.09.2004**
(21) Anmeldenummer: 00810335.0
(22) Anmeldetag: 18.04.2000
(51) Int. Cl.: F16B 13/08

(54) **Spreizanker**
Expanding anchor
Cheville expansible

(30) Priorität: 26.04.1999 DE 19918781
(43) Veröffentlichungstag der Anmeldung: 02.11.2000
(73) Patentinhaber: HILTI Aktiengesellschaft, 9494 Schaan (LI)
(72) Erfinder: Kaibach, Werner, 86807 Buchloe (DE); Raber, Stefan, 86916 Kaufering (DE)
(74) Vertreter: Wildi, Roland

(56) Entgegenhaltungen:
- EP-A- 0 367 672

## Beschreibung

Die Erfindung betrifft einen Spreizanker gemäss dem Oberbegriff des Patentanspruchs 1.

Spreizanker der gattungsgemässen Art umfassen üblicherweise eine mit einem Aussengewinde versehene Ankerstange, an deren einem Ende ein Kopfteil vorgesehen ist, das sich zu seinem freien Ende hin konusartig erweitert. Eine auf die Ankerstange gesteckte Spreizhülse weist an ihrem dem Kopfteil zugewandten Abschnitt Spreizlappen auf, die durch axiale Schlitze voneinander getrennt sind. Die Spreizlappen sind durch Auftreiben der Spreizhülse auf das Kopfteil radial ausstellbar und dienen der kraft- und/oder formschlüssigen Verankerung des Spreizankers im Bohrloch. Im Fall von selbstschneidenden Hinterschnittsystemen sind an einem oder mehreren der Spreizlappen Schneiden angeordnet, welche die Aussenfläche der Spreizlappen radial überragen und bei einer Rotation der Spreizhülse materialabtragend, fräsend im Bohrloch eine Hinterschneidung erzeugen.

Damit bei der Lagerung und dem Transport des Spreizankers die Ankerstange und die zugehörige Spreizhülse als Einheit vorliegen, ist eine Verliersicherung zwischen Ankerstange und Spreizhülse erforderlich. Diese dient dazu, die Hülse auf der Ankerstange festzulegen, damit sie nicht abfällt und verloren geht. Auf diese Weise liegt der Spreizanker immer im einsatzbereiten, vormontierten Zustand vor und muss nicht erst am Einsatzort aus seinen Einzelbestandteilen zusammengesetzt werden. Bei aus dem Stand der Technik bekannten Spreizankern, insbesondere bei bekannten Hinterschnittsystemen, besteht diese Verliersicherung zwischen der Ankerstange und der Spreizhülse aus einer Prägung der Hülse oder aus einem Gummiring, der auf die Ankerstange aufgebracht ist und die Spreizhülse am Herunterfallen sichern soll. Der Gummiring kann die Spreizhülse jedoch nur in begrenztem Umfang sichern. Bei etwas grösseren axialen Zug- oder Schubkräften verändert sich die axiale Lage des Gummirings entlang der Ankerstange. Dies kann soweit führen, dass die Spreizhülse aus dem Klemmbereich des Gummirings kommt und in weiterer Folge von der Ankerstange heruntergleitet.

Bei der Montage des Spreizankers ist auch eine Verdrehsicherung zwischen der Ankerstange und der Spreizhülse erforderlich, um ein sicheres und einfaches Aufdrehen einer Mutter auf den aus dem Bohrloch ragenden Abschnitt der Ankerstange zu gewährleisten. Eine zwischen der Ankerstange und der Spreizhülse vorgesehene Verdrehsicherung soll dabei sicherstellen, dass durch die reibschlüssig innerhalb des Bohrlochs gehaltene Spreizhülse die Ankerstange sich beim Aufdrehen der Mutter nicht mitdreht. In analoger Weise muss auch verhindert werden, dass sich die Ankerstange mitdreht, falls die Mutter wieder gelöst werden soll. Dies ist beispielsweise der Fall, wenn der Spreizanker wieder demontiert werden soll. Bei einer aus dem Stand der Technik bekannten Lösung ist dazu am aus dem Bohrloch ragenden, rückwärtigen Stirnende der Ankerstange eine Quernut angebracht, die zum Eingriff einer Schraubendreherklinge ausgebildet ist. Die Quernut ermöglicht es, die Ankerstange drehfest zu fixieren, während die Mutter abgeschraubt wird.

Es ist bei Spreizankern auch vielfach üblich, Setzmarkierungen anzubringen, die dem Anwender anzeigen sollen, ob der Spreizanker die erforderliche Setztiefe erreicht hat und korrekt im Bohrloch verankert worden ist. Aus dem Stand der Technik sind Hinterschnittsysteme bekannt, bei denen aus diesem Grund Setzmarkierungen an der Spreizhülse und an der Ankerstange angebracht sind. Die Markierung an der Aussenseite der Spreizhülse zeigt dem Anwender, ob der Spreizanker die geforderte Mindesteinbindetiefe erreicht hat. Eine Markierung an der Ankerstange, beispielsweise ein oder mehrere farblich markierte Gewindegänge, sollen die korrekte Aufspreizung der Spreizlappen im Bohrloch anzeigen. Ist die Markierung an der Ankerstange infolge der axialen Verschiebung der Spreizhülse sichtbar, kann der Anwender daraus abschätzen, dass die Spreizhülse ausreichend weit auf das sich konisch erweiternde Kopfteil der Ankerstange aufgetrieben worden und die Spreizlappen etwa im geforderten Ausmass radial ausgestellt worden sind. Die Ablesung der farbigen Markierungen ist relativ ungenau. Insbesondere bei grösseren Gewindesteigungen können sich daraus fehlerhafte Abschätzungen des Verspreizungsgrades ergeben.

Bei bestehenden Spreizankern, insbesondere bei bekannten Hinterschnittsystemen, sind als Verliersicherung, als Verdrehsicherung und als Setzmarkierung getrennt ausgeführte Einrichtungen vorgesehen. Dies verkompliziert und verteuert den Herstellungsprozess und stellt für den Anwender einen Unsicherheitsfaktor dar, da er ja eine Mehrzahl von Faktoren beobachten muss. Die bekannten Setzmarkierungen sind überdies vielfach nur relativ ungenau ablesbar, was beim Anwender zu Verunsicherungen darüber führen kann, ob der Spreizanker den geforderten Verspreizungsgrad aufweist.

Aus der EP 0 367 672 A1 ist ein Spreizanker mit einer Ankerstange bekannt, die einen Vorderabschnitt und einen mit einem Aussengewinde versehenen rückwärtigen Abschnitt aufweist. An ihrem vorderen Längsende ist die Ankerstange mit einem sich konusartig zum freien Ende hin erweiternden Kopfteil verbunden. Weiter weist der Spreizanker eine Spreizhülse auf, deren dem Kopfteil zugewandter Hülsenabschnitt mit Spreizlappen ausgestattet ist. Die Spreizlappen sind durch Längsschlitze voneinander getrennt und durch Auftreiben der Hülse auf das Kopfteil radial ausstellbar. Die Ankerstange weist zwischen dem Vorderabschnitt und dem rückwärtigen Abschnitt einen axial verlaufenden Bereich mit einem gegenüber dem rückwärtigen Abschnitt verjüngten Querschnitt auf.

Aufgabe der vorliegenden Erfindung ist es daher, diesen Nachteilen der aus dem Stand der Technik bekannten Spreizanker abzuhelfen. Es soll ein Spreizanker geschaffen werden, der eine Verliersicherung, eine Verdrehsicherung und eine Markierung für die Anzeige des Verspreizungsgrads aufweist, die einfach und kostengünstig herstellbar sind und hinsichtlich ihrer Funktion zuverlässig sind. Insbesondere soll der Spreizanker auch mit einer Setzmarkierung versehen sein, die es ermöglicht, den Verspreizungsgrad des Spreizankers nach dem Setzvorgang genauer abzulesen.

Die Lösung dieser Aufgaben besteht in einem Spreizanker mit den im kennzeichnenden Abschnitt des Patentanspruchs 1 angeführten Merkmalen. Demnach umfasst der erfindungsgemässe Spreizanker eine Ankerstange, die einen Vorderabschnitt und einen mit einem Aussengewinde versehenen rückwärtigen Abschnitt aufweist und an ihrem vorderen Längsende mit einem sich konusartig zum freien Ende hin erweiternden Kopfteil verbunden ist. Auf die Ankerstange ist eine Spreizhülse geschoben, deren dem Kopfteil zugewandter Hülsenabschnitt mit Spreizlappen ausgestattet ist, die durch Längsschlitze voneinander getrennt und durch Auftreiben der Hülse auf das Kopfteil radial ausstellbar sind. Zwischen dem Vorderabschnitt und dem rückwärtigen Abschnitt weist die Ankerstange einen axial verlaufenden Bereich mit einem gegenüber dem rückwärtigen Abschnitt vorzugsweise verjüngten Querschnitt auf, auf dem ein hülsenartiges Klemmglied axial unverschieblich gehalten ist. Das Klemmglied überbrückt den Ringspalt zwischen der Ankerstange und der aufgeschobenen Spreizhülse und koppelt die Ankerstange und die Spreizhülse miteinander drehfest durch einen Kraftschluss.

Der erfindungsgemäss ausgebildete Spreizanker vereint die Funktionen einer Verliersicherung für die Spreizhülse, einer Verdrehsicherung für Ankerstange und Spreizhülse und einer Setzmarkierung in einem einfach herstellbaren und montierbaren Element. Das Klemmglied ist axial unverschieblich im vorzugsweise verjüngten Bereich der Ankerstange gehalten. Die drehfeste Kopplung mit der Ankerstange erfolgt vorzugsweise durch Reibschluss. Dabei kann die reibschlüssige Verbindung bereits nach der Vormontage des Klemmgliedes an der Ankerstange aber noch vor der Montage der Spreizhülse zu einer drehfesten Verbindung führen. Bei montierter Spreizhülse ist das Klemmglied von der im Innendurch-messer kleineren Spreizhülse radial zusammengepresst. Dadurch wird eine gegebenenfalls bereits bestehende drehfeste Verbindung zwischen dem Klemmglied und der Ankerstange noch verstärkt oder es wird eine drehfeste Verbindung zwischen den beiden Teilen erzeugt. Beim axialen Aufschieben der Spreizhülse auf die Ankerstange muss eine Kraft überwunden werden, die umso grösser ist, je grösser der Aussendurchmesser des Klemmgliedes im Vergleich zum Innendurchmesser der Spreizhülse ist. Das Klemmglied überbrückt den Ringspalt zwischen der Ankerstange und der Innenwandung der Spreizhülse und koppelt die Ankerstange und die Spreizhülse drehschlüssig durch einen Kraftschluss. Die drehfeste Kopplung zwischen der Ankerstange und der Spreizhülse beeinträchtigt den Setzvorgang praktisch nicht, da beispielsweise im Fall eines selbstschneidenden Hinterschnittsystems die Ankerstange und die Spreizhülse ohnehin gemeinsam gedreht werden. Der beim axialen Verschieben der Spreizhülse entlang der Ankerstange auftretende Reibungswiderstand ist zwar gross genug, um eine zuverlässige Verliersicherung für die Spreizhülse zu bilden. Andererseits beeinträchtigt er die axiale Verschiebung der Spreizhülse, die durch relativ starke axiale Schläge in Richtung des Kopfteils der Ankerstange getrieben wird, nur unwesentlich. Der rückwärtige Endabschnitt des Klemmgliedes bildet eine Setzmarkierung, die dem Anwender unabhängig von einer Gewindesteigung den Verspreizungsgrad des Spreizankers anzeigt. Zur Erleichterung der Ablesbarkeit kann der rückwärtige Abschnitt des Klemmgliedes auch in einer gut erkennbaren Farbe eingefärbt sein, oder er kann mehrere ringförmige Markierungen tragen, die beispielsweise unterschiedliche Farben aufweisen, um dem Anwender den Grad der Verspreizung noch genauer anzuzeigen.

Es erweist sich von Vorteil für die Funktion der Verliersicherung und der Verdrehsicherung einerseits und für die beim Setzvorgang zusätzlich zu überwindende Reibkraft andererseits, wenn das Klemmglied einen Aussendurchmesser aufweist, der wenigstens gleich bis einige Zehntelmillimeter, vorzugsweise 0,01 mm bis 0,4 mm grösser ist als der Innendurchmesser der Spreizhülse.

Bei Spreizankern, bei denen der im Querschnitt verjüngte Bereich unmittelbar an den Gewindeabschnitt anschliesst, reicht es für die Funktion als Setzmarkierung aus, wenn das hülsenförmige Klemmglied eine axiale Erstreckung aufweist, die wenigstens der axialen Länge des im Querschnitt verjüngten Bereichs der Ankerstange entspricht. Als zweckmässig für die axiale Erstreckung des Klemmgliedes erweisen sich Längen, die etwa das 0,3-fache bis etwa das 5-fache, vorzugsweise das 0,5-fache bis das 3-fache des Innendurchmessers der Spreizhülse betragen.

In einer Variante des Spreizankers ragen von der Aussenfläche des Klemmgliedes nasenartige Vorsprünge ab. Dadurch kann der Aussendurchmesser des Klemmgliedes mit relativ kleinem Übermass gegenüber dem Innendurchmesser der Spreizhülse gewählt werden, was sich vorteilhaft auf die Kraft auswirkt, die für das Aufschieben der Spreizhülse auf die Ankerstange erforderlich ist. Die über den Umfang des Klemmgliedes verteilten nasenartigen Vorsprünge sind einer erhöhten Flächenpressung ausgesetzt und sind daher relativ leicht deformierbar.

Die Montage des Klemmgliedes auf dem verjüngten Bereich der Ankerstange ist erleichtert, wenn das Klemmglied in Längsrichtung geschlitzt und radial federbar ausgebildet ist. Zur Montage wird das Klemmglied einfach aufgeklippt.

Als Material für das Klemmglied erweist sich aus fertigungstechnischen Gründen, wegen seiner Elastizität und wegen der ihm eigenen Reibeigenschaften Kunststoff von Vorteil.

Eine aus fertigungs- und montagetechnischen Gründen besonders einfache Variante des Spreizankers weist ein Klemmglied auf, das als ein Schrumpfschlauch ausgebildet ist.

Im folgenden wird die Erfindung unter Bezugnahme auf in den Figuren dargestellte Ausführungsbeispiele näher erläutert. Die Darstellungen beschränken sich dabei auf die für das Verständnis der Erfindung notwendigen Einzelheiten. Es zeigen in schematischer Darstellung:
- Fig. 1: einen teilweisen Axialschnitt eines ersten Ausführungsbeispiels der Erfindung;
- Fig. 2: eine zweites Ausführungsbeispiel in einer zu Fig. 1 analogen Schnittdarstellung; und
- Fig. 3: ein weiteres Ausführungsbeispiel in analoger Darstellung.

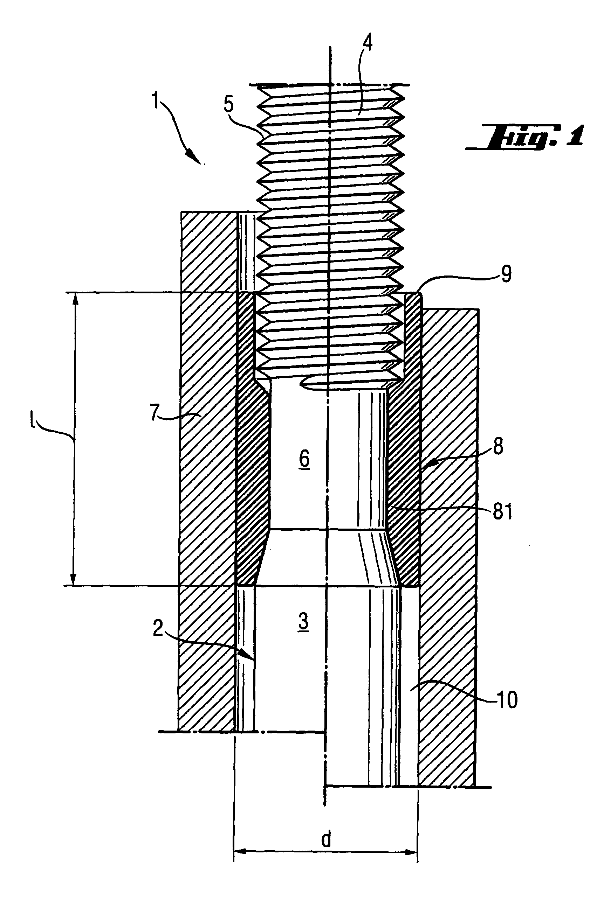

Die in den Fig. 1 - 3 dargestellten Ausführungsbeispiele 1, 11, 21 eines erfindungsgemässen Spreizankers umfassen jeweils eine Ankerstange 2, 12, 22 und eine Spreizhülse 7, 17, 27. Dabei zeigen die linken Hälften der Fig. 1 - 3 jeweils den Spreizanker 1, 11, 21 im Ausgangszustand, während der Spreizanker 1, 11, 21 in den rechten Hälften der Figuren im gesetzten Zustand dargestellt ist. Die Ankerstangen 2, 12, 22 weisen jeweils einen rückwärtigen Abschnitt 4, 14, 24 auf, der mit einem Aussengewinde 5, 15, 25 ausgestattet ist. Der Vorderabschnitt 3, 13, 23 der Ankerstange 2, 12, 22 ist mit einem nicht näher dargestellten Kopfteil verbunden, dessen Aussendurchmesser sich in an sich bekannter Weise konusartig in Richtung des freien Vorderendes der Ankerstange 2, 12, 22 erweitert. Die mit 7, 17, 27 bezeichnete Spreizhülse weist an ihrem dem Kopfteil zugewandten Hülsenabschnitt eine Anzahl von Spreizlappen auf, die durch Auftreiben der Spreizhülse auf das Kopfteil radial ausstellbar sind. Soweit entsprechen die Ausführungsbeispiele 1, 11, 21 des erfindungsgemässen Spreizankers den aus dem Stand der Technik bekannten Lösungen.

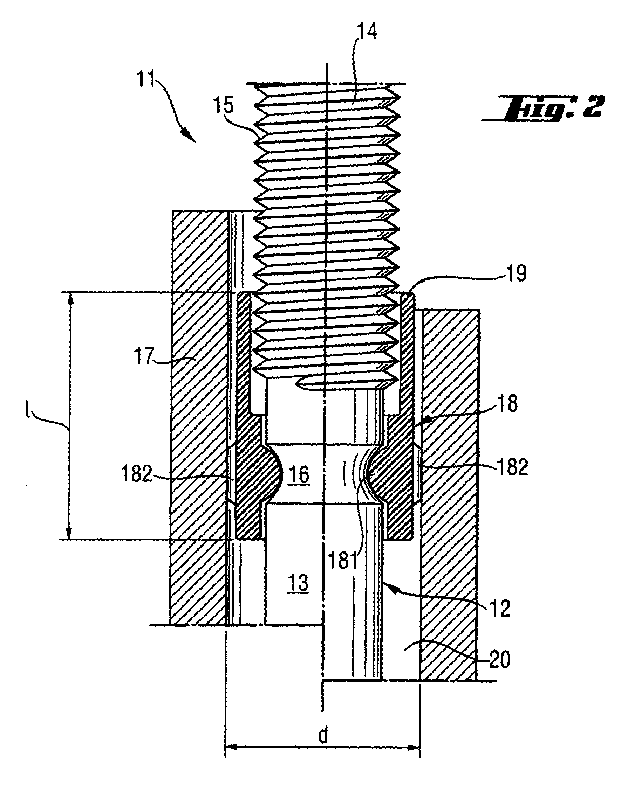

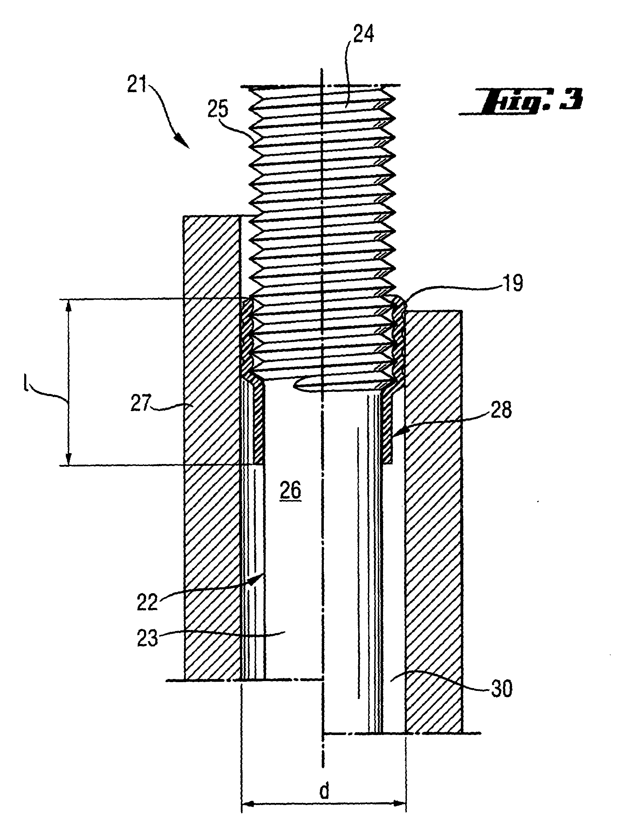

Zum Unterschied von den bekannten Spreizankern trägt die Ankerstange 2, 12, 22 ein hülsenartiges Klemmglied 8, 18, 28, das in einem axialen Bereich 6, 16, 26 der Ankerstange 2, 12, 22 angeordnet ist, der sich zwischen dem Vorderabschnitt 3, 13, 23 und dem rückwärtigen, mit dem Aussengewinde 5, 15, 25 versehenen Abschnitt 4, 14, 24 der Ankerstange 2, 12, 22 erstreckt. Der das Klemmglied 8, 18, 28 tragende Abschnitt 6, 16, 26 weist einen gegenüber dem rückwärtigen Abschnitt 4, 14, 24 der Ankerstange 2, 12, 22 verjüngten Querschnitt auf. Mit Vorteil besitzt der Vorderabschnitt 3, 13 der Ankerstange 2, 12 wiederum einen grösseren Aussendurchmesser, der vorzugsweise dem Aussendurchmesser des rückwärtigen Abschnitts 4, 14 entspricht. Das hülsenförmige Klemmglied 8, 18 besitzt vorzugsweise eine Innenkontur, die dem verjüngten Bereich 6, 16 angeglichen ist. Bei dem in Fig. 1 dargestellten Ausführungsbeispiel des Spreizankers 1 ragen von der Innenfläche des hülsenförmigen Klemmgliedes 8 axiale Rippen 81 ab, deren Länge der axialen Erstreckung des verjüngten Bereichs 6 entspricht. Anstelle von axialen Rippen 81 kann das hülsenförmige Klemmglied 8 auch einen axialen Abschnitt mit einer grösseren Wandstärke aufweisen, dessen Länge auf die axiale Erstreckung des verjüngten Bereichs 6 abgestimmt ist. Die Rippen 81 greifen in den verjüngten Bereich 6 der Ankerstange 2 ein und fixieren das Klemmglied formschlüssig gegen eine axiale Verschiebung. Bei dem Ausführungsbeispiel gemäss Fig. 2 ist der verjüngte Bereich 16 der Ankerstange 12 als umlaufende Ringnut ausgebildet. Von der Innenfläche des hülsenförmigen Klemmgliedes 18 ragt eine radial umlaufende Rippe 181 ab, die formschlüssig in die Ringnut 16 eingreift und das Klemmglied 18 axial festlegt. Zur Vereinfachung der Montage des Klemmgliedes 8, 18 kann dieses mit einem nicht näher dargestellten axialen Schlitz versehen sein. Vorzugsweise besteht das Klemmglied 8, 18 aus einem radial federbaren Material, beispielsweise aus einem in einem Spritzgiessprozess verarbeitbaren Kunststoff. Bei dem in Fig. 3 dargestellten Ausführungsbeispiel des Spreizankers 21 ist das Klemmglied 28 als ein Schrumpfschlauch ausgebildet.

Der Aussendurchmesser des Klemmgliedes 8, 18, 28 ist derart bemessen, dass es den zwischen der Ankerstange 2, 12, 22 und der Innenwandung der Spreizhülse 7, 17, 27 verbleibenden Ringspalt 10, 20, 30 überbrückt. Dabei werden die Ankerstange 2, 12, 22 und die Spreizhülse 7, 17, 27 kraftschlüssig, durch Klemmung, drehfest gekoppelt. Der Aussendurchmesser des Klemmgliedes 8, 18, 28 ist dabei wenigstens gleich bis einige Zehntelmillimeter, vorzugsweise 0,01 mm bis 0,4 mm grösser als der Innendurchmesser d der Spreizhülse 7, 17, 27. In einer in Fig. 2 dargestellten Variante sind zur Verbesserung der Klemmwirkung an der Aussenseite des Klemmgliedes 18 zusätzlich radial abragende, nasenartige Vorsprünge 182 vorgesehen, die sich bei montierter Spreizhülse 17 infolge der erhöhten Flächenpressung verformen können.

Die Funktion als Setzmarkierung wird vom rückwärtigen Endabschnitt 9, 19, 29 des Klemmglieds 8, 18, 28 erfüllt. Bei Spreizankern, bei denen der im Querschnitt verjüngte Bereich unmittelbar an den Gewindeabschnitt anschliesst, reicht es im Prinzip für die Funktion als Setzmarkierung aus, wenn das hülsenförmige Klemmglied eine axiale Erstreckung aufweist, die wenigstens der axialen Länge des im Querschnitt verjüngten Bereichs der Ankerstange entspricht. Zweckmässigerweise ragt der rückwärtige Endabschnitt 9, 19, 29 des hülsenförmigen Klemmgliedes 8, 18, 28 jedoch in den mit dem Aussengewinde 5, 15, 25 versehenen rückwärtigen Abschnitt 4, 14, 24 der Ankerstange 2, 12, 22. Die axiale Erstreckung I des Klemmgliedes 8, 18, 28 beträgt dabei etwa das 0,3-fache bis etwa das 5-fache, vorzugsweise das 0,5-fache bis das 3-fache des Innendurchmessers d der Spreizhülse 7, 17, 27. Der rückwärtige Endabschnitt 9, 19, 29 des Klemmgliedes 8, 18, 28 kann zur Vereinfachung der Ablesbarkeit mit vorzugsweise farbigen Markierungen versehen sein.

Bei dem erfindungsgemäss ausgebildeten Spreizanker kann es sich um ein kraftund/oder formschlüssig verankerndes Befestigungssystem handeln. Vorzugsweise wird die erfindungsgemässe Ausbildung bei Hinterschnittsystemen eingesetzt, die beim Setzvorgang selbsttätig im Bohrloch eine Hinterschneidung erzeugen, in der sie formschlüssig verankerbar sind.

## Patentansprüche

1. Spreizanker mit einer Ankerstange (2, 12, 22), die einen Vorderabschnitt (3, 13, 23) und einen mit einem Aussengewinde (5, 15, 25) versehenen rückwärtigen Abschnitt (4, 14, 24) aufweist und an ihrem vorderen Längsende mit einem sich konusartig zum freien Ende hin erweiternden Kopfteil verbunden ist, und einer Spreizhülse (7, 17, 27), deren dem Kopfteil zugewandter Hülsenabschnitt mit Spreizlappen ausgestattet ist, die durch Längsschlitze voneinander getrennt und durch Auftreiben der Hülse auf das Kopfteil radial ausstellbar sind, wobei die Ankerstange (2, 12, 22) zwischen dem Vorderabschnitt (3, 13, 33) und dem rückwärtigen Abschnitt (4, 14, 24) einen axial verlaufenden Bereich (6, 16, 26) mit einem gegenüber dem rückwärtigen Abschnitt (4, 14, 24) vorzugsweise verjüngten Querschnitt aufweist, **dadurch gekennzeichnet, dass** auf dem axial verlaufenden Bereich (6, 16, 26) ein hülsenartiges Klemmglied (8, 18, 28) axial unverschieblich gehalten ist, welches den Ringspalt (10, 20, 30) zwischen der Ankerstange (2, 12, 22) und der aufgeschobenen Spreizhülse (7, 17, 27) überbrückt und die Ankerstange (2, 12, 22) und die Spreizhülse (7, 17, 27) miteinander durch Kraftschluss drehfest koppelt.

2. Spreizanker nach Anspruch 1, **dadurch gekennzeichnet, dass** das Klemmglied (8, 18, 28) einen Aussendurchmesser aufweist, der wenigstens gleich bis einige Zehntelmillimeter, vorzugsweise 0,01 mm bis 0,4 mm grösser ist als der Innendurchmesser (d) der Spreizhülse (7, 17, 27).

3. Spreizanker nach einem der vorangehenden Ansprüche, **dadurch gekennzeichnet, dass** der axial verlaufenden Bereich (6, 16, 26) einen verjüngten Querschnitt aufweist und, dass das hülsenförmige Klemmglied (8, 18, 28) eine axiale Erstreckung (I) aufweist, die wenigstens der axialen Länge des axial verlaufenden Bereichs (6, 16, 26) der Ankerstange (2, 12, 22) entspricht und etwa 0,3 - 5 mal dem Innendurchmesser (d), vorzugsweise 0,5 - 3 mal dem Innendurchmesser (d) der Spreizhülse (7, 17, 27) beträgt.

4. Spreizanker nach einem der vorangehenden Ansprüche, **dadurch gekennzeichnet, dass** von der Aussenfläche des Klemmglieds (18) nasenartige Vorsprünge (182) abragen.

5. Spreizanker nach einem der vorangehenden Ansprüche, **dadurch gekennzeichnet, dass** das Klemmglied in Längsrichtung geschlitzt und radial federbar ausgebildet ist.

6. Spreizanker nach einem der vorangehenden Ansprüche, **dadurch gekennzeichnet, dass** das Klemmglied (7, 17, 27) aus Kunststoff besteht.

7. Spreizanker nach einem der Ansprüche 1 - 4, **dadurch gekennzeichnet, dass** das Klemmglied (28) ein Schrumpfschlauch ist.

## Claims

1. Expansion anchor having an anchor shank (2, 12, 22) that has a front section (3, 13, 23) and a rear section (4, 14, 24) provided with an outer thread (5, 15, 25) and at its front longitudinal end is connected with a head member conically enlarged towards the free end, and having an expansion sleeve (7, 17, 27) whose sleeve section that faces the head member is fitted with expansion flanges that are separated from each other by longitudinal slots and can be set radially outwardly by driving the sleeve onto the head member, the anchor shank (2, 12, 22) having an axially extending region (6, 16, 26) between the front section (3, 13, 23) and the rear section (4, 14, 24) with a cross section that is preferably reduced as compared to that of the rear section (4, 14, 24), **characterised in that** a sleeve like clamping element (8, 18, 28) is held on the axially extending region (6, 16, 26) so as not to be displaceable axially and which bridges the annular gap (10, 20, 30) between the anchor shank (2, 12, 22) and the expansion sleeve (7, 17, 27) that is placed on it and couples the anchor shank (2, 12, 22) and the expansion sleeve (7, 17, 27) to each other by force constrained engagement so as to be fast against rotation.

2. Expansion anchor according to claim 1, **characterised in that** the clamping element (8, 18, 28) has an outer diameter which is at least equal, up to a few tenths of a millimetre larger, preferably 0.01 mm to 0.4 mm larger, than the inner diameter (d) of the expansion sleeve (7, 17, 27).

3. Expansion anchor according to one of the preceding claims, **characterised in that** the axially extending region (6, 16, 26) has a reduced cross section and that the sleeve shaped clamping element (8, 18, 28) is of an axial extent which corresponds at least to the axial length of the axially extending region (6, 16, 26) of the anchor shank (2, 12, 22) and amounts to about 0.3 - 5 times the inner diameter (d), preferably 0.5 - 3 times the inner diameter (d) of the expansion sleeve (7, 17, 27).

4. Expansion anchor according to one of the preceding claims, **characterised in that** nib shaped projections (182) extend from the outer surface of the clamping element (18)

5. Expansion anchor according to one of the preceding claims, **characterised in that** the clamping element is slotted in the longitudinal direction and is made radially springy.

6. Expansion anchor according to one of the preceding claims, **characterised in that** the clamping element (7, 17, 27) is made of plastics.

7. Expansion anchor according to one of claims 1 - 4, **characterised in that** the clamping element (28) is of shrunk-down tubing.

## Revendications

1. Boulon d'ancrage à expansion, avec une tige d'ancrage (2, 12, 22) qui comporte une portion avant (3, 13, 23) et une portion arrière (4, 14, 24) pourvue d'un filetage extérieur (5, 15, 25) et qui, à son extrémité longitudinale avant, est pourvue d'une partie de tête s'élargissant sous forme conique vers l'extrémité libre, et avec un manchon expansible (7, 17, 27) dont la portion de manchon tournée vers la partie de tête est munie de pattes expansibles qui sont séparées les unes des autres par des fentes longitudinales et sont déployables radialement par emmanchement du manchon sur la partie de tête, la tige d'ancrage (2, 12, 22) comportant, entre la portion avant (3, 13, 33) et la portion arrière (4, 14, 24), une zone s'étendant axialement (6, 16, 26) avec une section transversale de préférence rétrécie par rapport à la portion arrière (4, 14, 24), **caractérisé en ce que** dans la zone s'étendant axialement (6, 16, 26) est maintenu sans possibilité de translation axiale un organe de serrage en forme de manchon (8, 18, 28) qui comble l'interstice annulaire (10, 20, 30) entre la tige d'ancrage (2, 12, 22) et le manchon expansible emmanché (7, 17, 27) et solidarise en rotation la tige d'ancrage (2, 12, 22) et le manchon expansible (7, 17, 27) entre eux par conjugaison de forces.

2. Boulon d'ancrage à expansion selon la revendication 1, **caractérisé en ce que** l'organe de serrage (8, 18, 28) possède un diamètre extérieur qui est au moins égal à supérieur de quelques dixièmes de millimètres, de préférence de 0,01 mm à 0,4 mm, au diamètre intérieur (d) du manchon expansible (7, 17, 27).

3. Boulon d'ancrage à expansion selon une des revendications précédentes, **caractérisé en ce que** la zone s'étendant axialement (6, 16, 26) présente une section transversale rétrécie, et **en ce que** l'organe de serrage en forme de manchon (8, 18, 28) présente une extension axiale (1) qui correspond au moins à la longueur axiale de la zone s'étendant axialement (6, 16, 26) de la tige d'ancrage (2, 12, 22) et est égale à environ 0,3 à 5 fois le diamètre intérieur (d), de préférence à 0,5 à 3 fois le diamètre intérieur (d) du manchon expansible (7, 17, 27).

4. Boulon d'ancrage à expansion selon une des revendications précédentes, **caractérisé en ce que** des saillies en forme de talons (182) dépassent de la face extérieure de l'organe de serrage (18).

5. Boulon d'ancrage à expansion selon une des revendications précédentes, **caractérisé en ce que** l'organe de serrage est conçu de manière fendue dans la direction longitudinale et avec une élasticité radiale.

6. Boulon d'ancrage à expansion selon une des revendications précédentes, **caractérisé en ce que** l'organe de serrage (7, 17, 27) est constitué de matière plastique.

7. Boulon d'ancrage à expansion selon une des revendications 1 à 4, **caractérisé en ce que** l'organe de serrage (28) est un tube flexible thermorétractable.
